# EUROPEAN PATENT APPLICATION

(11) **EP 1 792 645 A1**
(43) Date of publication of application: **06.06.2007**
(21) Application number: 06255644.4
(22) Date of filing: 02.11.2006
(51) Int. Cl.: B01D 29/52

(54) **Combination wash and barrier filter**

(30) Priority: 09.11.2005 US 270149
(71) Applicant: Hamilton Sundstrand Corporation, Windsor Locks, CT 06096-1010 (US)
(72) Inventor: Marocchini, Francis, Somers, CT 06071 (US); Paradise, Bruce, Avon, CT 06001 (US)
(74) Representative: Leckey, David Herbert

(57) **Abstract**

The fuel filter assembly (14) includes multiple tubes (24) within a combination wash and barrier flow filter. The filter (14) is designed to be used alternately between conventional wash flow mode and periodic barrier mode. The tubes (24) are manufactured of a mesh or screen material. In wash flow mode, flow passes through the filter (14), some of the fluid exiting radially through the sidewalls (40) of the tubes (24). The sidewalls (40) filter particles out of the fluid and the particles blocked by the sidewalls (40) are washed out the second end of the tube (24). In barrier mode, the motive flow is suspended and all of the potential contaminant is collected on the screen. Over time the screen will become increasing clogged and the pressure drop across the screen will increase. By adding additional tubes (24) to the filter additional surface area of sidewalls (40) is obtained without requiring an undesirable lengthening of the filter (14).

## Description

This invention relates to a wash flow filter for fuel filtration which utilizes plural parallel tubes.

Fuel systems, in particular for aircraft applications, require relatively clean fuel. Wash flow filters are commonly used in fuel systems to provide maintenance free systems for filtering contaminants from fuel. The filters are typically cylindrical or conical in shape. Fluid flow enters the cylinder at one end and flows out an opposing end. The cylinders are formed from a screen material to act as a filter. As the fluid flows through the cylinder some of the fluid passes radially out through the screen. Contaminants within the fuel are caught by the screen and remain within the cylinder. The fluid that has exited radially from the cylinders is filtered fuel. As other fluid flow continues to pass along the cylinder, it removes the contaminants from the screen to provide a self-cleaning filter.

The requirements of the fuel system determine the size of the wash flow filters. The surface area of the screen governs the amount of filtration obtained by the filter. Additionally, the velocity of the fluid passing through the filter is critical for washing the contaminants from the filtering material. Fluid velocity is controlled by the diameter of the cylinder. Therefore, the velocity required for flushing the contaminants dictates the diameter of the filter. Because the diameter of the tube is limited, the variable for controlling the amount of filtration is the length of the cylinder.

As fuel system become more complex the amount of filtration required increases. Higher levels of filtration cause the length of the cylinder the filters to increase. Fitting the required filter within the available system space becomes a problem as the filter lengthens.

A wash flow filter that does not require increasing length to maintain a desired fluid velocity and filtration level is needed.

A preferred embodiment of a fuel filter assembly of the present invention includes multiple tubes within a wash flow filter. The filter is assembled within a bore. Multiple tubes run from a first header to a second header. A first seal is located in the first header to prevent fluid outside the bore and within the tubes from mixing with fluid inside the bore and outside of the tubes. The second header has a second seal similar to the first seal.

Fluid enters the filter at a first end and exits the filter at a second end. The tubes are manufactured of a mesh or filter material. Thus, as flow passes through the tubes some of the fluid exits radially through the sidewalls of the tubes. The sidewalls filter particles out of the fluid as the fluid passes through to obtain a filtered fluid. As more fluid flows along the fluid path the particles blocked by the sidewalls are washed out the second end of the tube. Thus, the filter is self-cleaning. The washed fluid that has exited the tubes' sidewalls is directed to a device requiring filtered fluid, such as an engine.

The fuel filter assembly has two distinct operating modes a conventional wash flow mode and a barrier filter mode. In "barrier" mode the axial flow through the filter is shut off forcing all flow to pass through the screen radially. During this time period, the screen collects all the contaminant that is larger than the minimum screen opening and proceeds to become clogged until the axial motive flow is re-instated allowing the wash mode to be re-established. Within a short period of time the screen is washed fully clean again.

The requirements of the fuel system determine the size of the filter. The component packaging determines the maximum diameter of the filter. However, the velocity of the fluid passing through the filter is critical for washing the contaminants from the filter. Velocity of the fluid is controlled by the diameter of the individual tubes within the filter.

The surface area of the sidewalls of the tubes governs the amount of filtration obtained by the filter as a whole. Because the component packaging is somewhat fixed the use of additional tubes provides benefits in design freedom. By adding additional tubes to the filter additional surface area of sidewalls is obtained without requiring undesirable lengthening of the filter and increased contaminant capacity when operated in barrier mode. The tubes may have a constant diameter cross-section. Alternatively, the cross-section may be reduced in diameter over the length of the tubes, such that the fluid velocity within the tubes remains relatively constant relative to the draw of radial washed fluid.

The use of multiple wash tubes allows for increased filter surface area, which allows greater contaminant capacity with minimal pressure drop, during barrier mode operation, allows for optimum filter tube sizing to obtain ideal wash velocities which ensures effective cleaning of the filter element and a more compact filter package for the given screen area, allowing for less weight than conventional packaging.

These and other features of the present invention can be best understood from the following specification and drawings, the following of which is a brief description.
Figure 1 is side view of a wash flow filter and bore assembly of the present invention;
Figure 2 is a schematic illustration of fluid flow through a fuel filtering system;
Figure 3 is an illustration of fluid flow through a portion of the wash flow filter of the present invention;
Figure 4 is a perspective view of one embodiment of a wash flow filter of the present invention; and
Figure 5 is an illustration of a conical filter tube of a wash flow filter of the present invention.

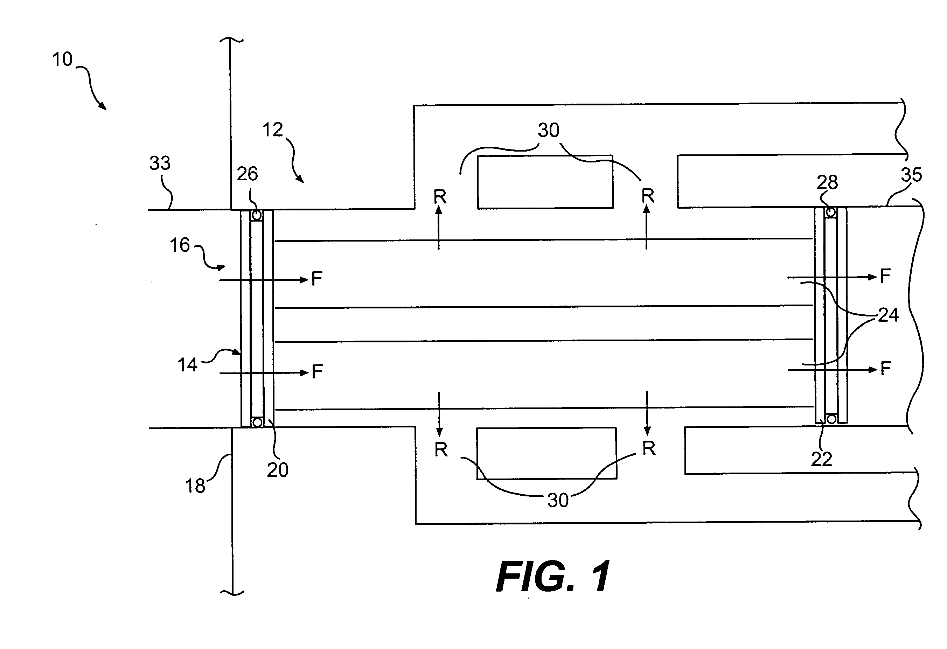

Figure 1 illustrates a fuel system 10 when in a conventional wash mode having a filter assembly 12 that includes a wash flow filter 14. A bore 16 is located in a wall 18 for receiving the filter 14. The filter 14 includes a first header 20 and a second header 22. Multiple tubes 24 run from the first header 20 to the second header 22. The tubes 24 are formed of a material that will block contaminants, i.e. a mesh or screen material. A first seal 26 is located in the first header 20 to prevent fluid outside the bore 16 and within the tubes 24 from mixing with fluid inside the bore 16 and outside the tubes 24. The second header 22 has a second seal 28 similar to the first seal 26. The second seal 28 prevents fluid outside the bore 16 and within the tubes 24 from mixing with fluid within the bore 16.

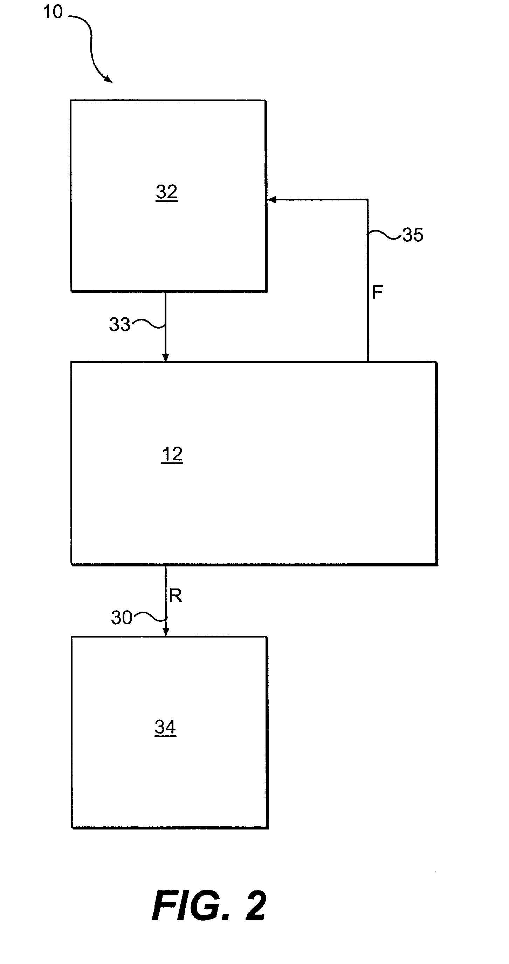

Figure 2 is a schematic illustrating fluid flow through the fuel system 10 when in the conventional wash mode. Fuel from a storage tank 32 enters the filter assembly 12, through an inlet 33. The fluid passes into tubes 24. A portion of the fluid exits the tubes 24 into the bore 16. Fluid within the bore 16 and outside the tubes 24 is carried away by passages 30 to use for combustion within an engine 34. In particular, engine 34 may be an aircraft engine. The rest of the fluid passes straight through the tubes 24 out a second end of the filter 14 to an outlet return 35. This fluid returns to the storage tank 32 to be later passed through the filter 14 again.

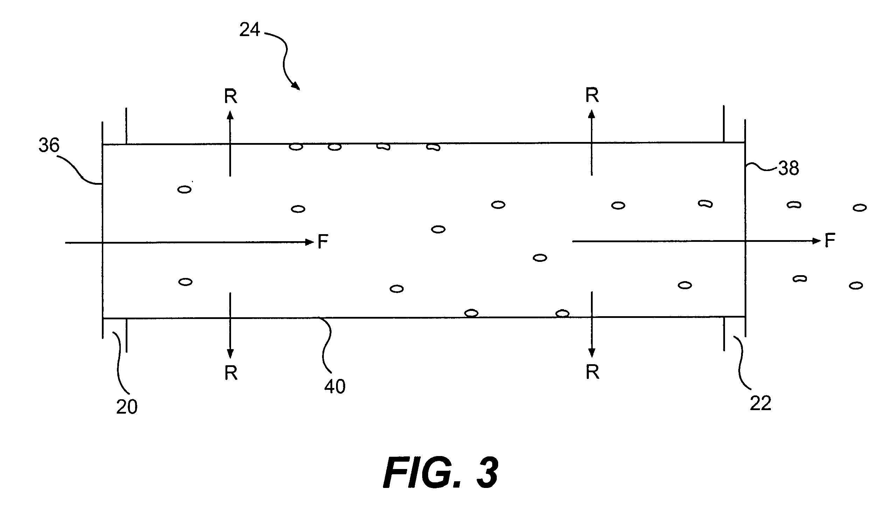

Figure 3 shows a portion of the wash flow filter 14 when in the conventional wash mode showing a single tube 24. Fluid enters the filter 14 at a first end 36 and exits the filter 14 at a second end 38. Fluid flow is indicated by arrow F. Thus, as flow passes through the tubes 24 some of the fluid exits radially through sidewalls 40 of the tubes 24. The sidewalls 40 filter particles out of the fluid as the fluid passes through the sidewalls 40 to obtain a filtered fluid. Arrows R indicate the radial fluid flow through the sidewalls 40. As fluid flows along the fluid path F the particles blocked by the sidewalls 40 are washed out the second end 38 of the tube 24. Thus, the filter 14 is self-cleaning. The washed fluid that has exited the tubes 24 is carried away by passages 30 in the bore 16 to an engine 34.

The fuel filter assembly 12 has two distinct operating modes a conventional wash flow mode and a barrier filter mode. In one embodiment of a fuel system 10, the axial motive flow through the filter 14 is periodically shut off forcing all flow to pass through the tube 24 radially, indicated by arrows R. The fluid path F is closed off at the second end 38 to prevent fluid from exiting filter 14 into the outlet return 35 and passing back to the storage tank 32. This puts the screen into a pure "barrier" mode. During this time period, the screen collects all the contaminant that is larger than the minimum screen opening and proceeds to become clogged until the axial motive flow is re-instated allowing the wash mode to be re-established. That is the fluid path F at the second end 38 is opened. Within a short period of time the screen is washed fully clean again.

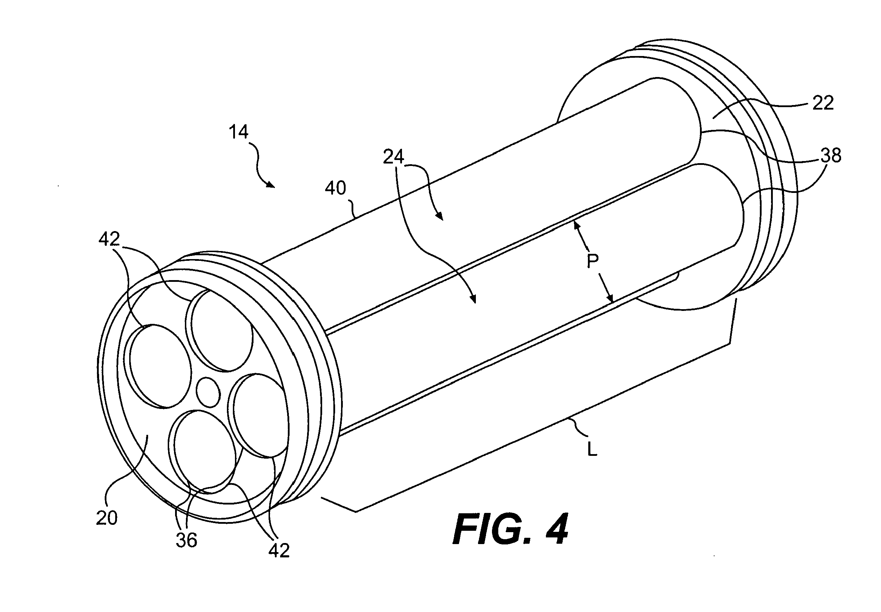

Figure 4 shows a perspective view of the wash flow filter 14. The requirements of the fuel system determine the filtration level and amount of filtration area required by the filter 14. The diameter and length of the bore 16 determines the maximum envelope of the filter 14. However, the velocity of the fluid passing through the filter 14 is critical for washing the contaminants from the fluid. Velocity of the fluid is controlled by the diameter D of the each tube 24. Therefore, one skilled in sizing of filtration systems can iterate between the number and size of filtration tubes 24 that can fit within the maximum envelope and length of the bore 16, to achieve the desired wash velocity and filtration area.

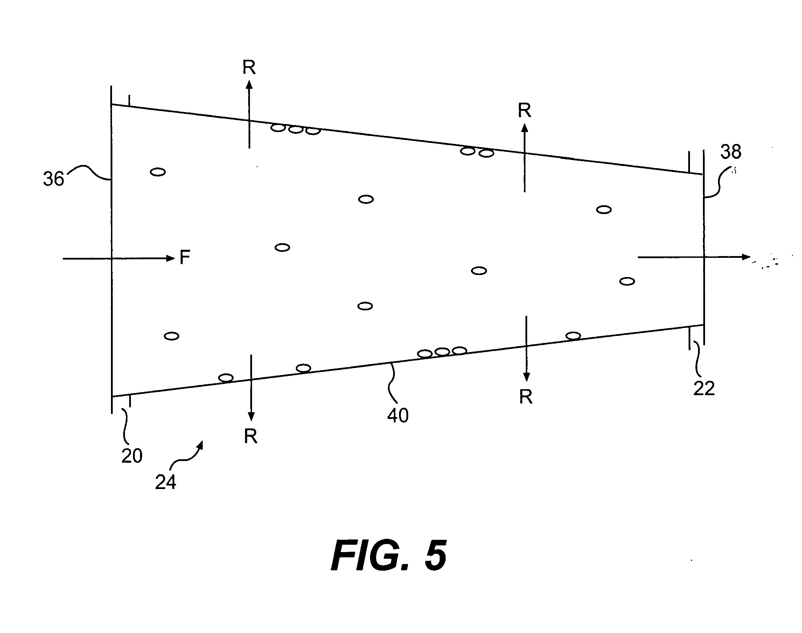

The surface area of the sidewalls 40 governs the amount of filtration obtained by the filter 14 and its contaminant holding capacity in barrier mode. In order to decrease the pressure drop during barrier mode and increase the contaminant holding capacity, additional tubes may be utilized within the filter assembly. By adding additional tubes 24 to the filter 14 additional surface area of sidewalls 40 is obtained without requiring undesirable lengthening of the filter 14. Also, the plurality of tubes keeps their diameter small and helps to maintain the desirable high fluid velocity during wash mode. Although, in the embodiment shown, there are four tubes 24, one skilled in the art would realize the number of tubes may vary for each application. The tubes 24 shown have a constant diameter cross-section. Referring to Figure 5, the cross-section of the tubes 24 may also be reduced in diameter over the length L. Thus, as fluid exits the tubes 24, the fluid velocity within the tubes 24 remains constant.

The filter 14 is assembled by placing the first end 36 of the tubes 24 into the first header 20 and the second end of the tubes 24 into the second header 22. The first header 20 and the second header 22 are manufactured to have the one hole 42 for each required tube 24. Alternatively, the first end 36 of each tube 24 could be inserted into the first header 20 and then the second end 38 of each tube 24 could be inserted into the second header 22 until all the holes within the first header 20 and the second header 24 have a corresponding tube 24.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A fuel filter (14) comprising:
a plurality of filter tubes (24), each having a first and a second end;
a header (20) connecting said plurality of filter tubes (24) at said first ends;
a second header (22) connecting said plurality of filter tubes (24) at said second ends.

2. A fuel filter (14) comprising:
a first header (20) having a plurality of openings (42);
a plurality of filter tubes (24), each having a first end communicating with said plurality of openings (42) in said first header (20); and
a second header (22) having a second plurality of openings (42) wherein said plurality of filter tubes (24) each have a second end communicating with said second plurality of openings (42).

3. The fuel filter of claim 1 or 2, wherein each of said plurality of filter tubes (24) are cylindrical.

4. The fuel filter of claim 3, wherein each of said plurality of filter tubes (24) are the same diameter.

5. The fuel filter of claim 1 or 2, wherein each of said plurality of filter tubes (24) have a cross-section of varying diameter.

6. The fuel filter of claim 5, wherein said diameter decreases from said first end to said second end.

7. The fuel filter of any preceding claim, wherein each of said plurality of filter tubes (24) have an equal length.

8. The fuel filter of any preceding claim, wherein said filter (24) is in one of a conventional wash mode and a barrier mode, and said filter (24) is self-cleaning when in said wash mode.

9. The fuel filter of claim 8, wherein said plurality of tubes (24) in said barrier mode have an increased dirt holding capacity and a minimal pressure drop.

10. The fuel filter of any preceding claim, wherein said plurality of tubes (24) maintain a wash flow velocity of a fluid for cleaning said plurality of tubes (24).

11. An engine comprising:
a fuel tank (32);
a fuel filter (12) having a plurality of filter tubes (24) connected in parallel to said fuel tank;
an engine (34) connected to the fuel filter (12) for receiving filtered fuel from the fuel filter (12); and
a filter return line (35) connecting the fuel filter (12) to the fuel tank (32) for returning unfiltered fuel to the fuel tank (32).

12. The engine of claim 11, wherein said engine (10) is an aircraft engine.

13. The engine of claim 11 or 12, wherein each of said plurality of filter tubes (24) are cylindrical.

14. The engine of claim 13, wherein each of said plurality of filter tubes (24) are the same diameter.

15. The engine of claim 11 or 12, wherein each of said plurality of filter tubes (24) have a cross-section of varying diameter.

16. The engine of claim 15, wherein said diameter decreases from a first end to a second end.

17. The engine of any of claims 11 to 16, wherein each of said plurality of filter tubes have an equal length.

18. The engine of any of claims 11 to 17, wherein said plurality of filter tubes (24) each have a first end positioned in one of a first plurality of openings (42) in a first header (20), and a second end positioned in one of a second plurality of openings (42) in a second header (22).
